# EUROPÄISCHE PATENTSCHRIFT

(11) **EP 0 419 948 B1**
(45) Veröffentlichungstag und Bekanntmachung des Hinweises auf die Patenterteilung: **24.04.1996**
(21) Anmeldenummer: 90117581.0
(22) Anmeldetag: 12.09.1990
(51) Int. Cl.: H04M 3/42, H04M 1/00

(54) **Verfahren zur Einleitung vermittlungstechnischer Funktionen und Dienste**
Method for initiating switching-related functions and services
Méthode pour lancer des fonctions et services de commutation

(30) Priorität: 28.09.1989 DE 3932487
(43) Veröffentlichungstag der Anmeldung: 03.04.1991
(73) Patentinhaber: SIEMENS AKTIENGESELLSCHAFT, D-80333 München (DE)
(72) Erfinder: Nowotny, Klaus, Dipl.-Ing. (FH), D-8000 München 60 (DE)

(56) Entgegenhaltungen:
- EP-A- 0 279 233
- DE-A- 3 112 475
- DE-A- 3 410 608
- DE-C- 3 139 501

## Beschreibung

Die Erfindung betrifft ein Verfahren zur Einleitung vermittlungstechnischer Funktionen und Dienste nach dem Oberbegriff des Anspruchs 1.

Ein derartiges Verfahren ist z.B. aus der DE 31 12 475A1 (s.Seite 10, Zeilen 23 und 24) bekannt. Bei diesem Verfahren werden alle technisch möglichen Funktionen und Dienste unabhängig von der jeweiligen Verbindungssituation bzw. der vorhandenen Teilnehmerberechtigung angezeigt. Dadurch kommt es zu zeitaufwendigen überflüssigen Anzeigen und zu unnötigen Fehlverbindungen.

Aufgabe der vorliegenden Erfindung ist es, ein Verfahren der eingangs genannten Art anzugeben, mit dessen Hilfe es möglich ist, vermittlungstechnische Funktionen und Dienste mit wenigen Tasten und möglichst wenig Tastenbetätigungen ausführen zu können.

Diese Aufgabe wird für ein Verfahren der obengenannten Art dadurch gelöst, daß auf dem Display D nur die Funktionen und Dienste nach ihrer Verwendungshäufigkeit sortiert angezeigt werden, welche abhängig von den der jeweiligen Fernsprechstation zugeordneten Teilnehmerberechtigungen der jeweiligen Situation entsprechend vorliegen.

Der Vorteil des erfindungsgemäßen Verfahrens besteht darin, daß unnötige Anzeigen und Fehlbedienungen vermieden werden und daß sehr häufig benutzte Funktionen und Dienste schneller eingeleitet werden können.

Eine vorteilhafte Ausbildung des Verfahrens besteht darin, daß die jeweils aktuellen Funktionen und Dienste mittels einer dritten Sondertaste beendet werden. Eine andere zweckmäßige Ausbildung des Verfahrens besteht darin, daß durch längeren Tastendruck der ersten Sondertaste eine umlaufende Anzeige am Display erfolgt, während ein kurzer Tastendruck der ersten Sondertaste eine Einzelanzeige auf dem Display bewirkt.

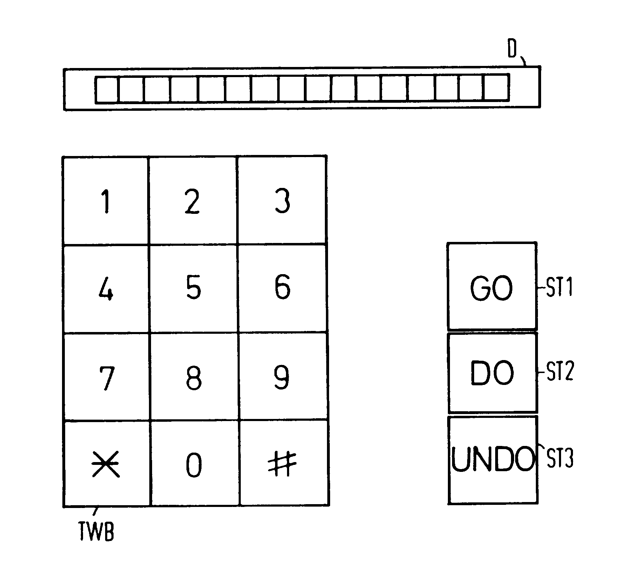

Das Verfahren wird anhand einer Figur erläutert. In der Figur ist ein zwölfteiliger Tastwahlblock TWB dargestellt, wie er heutzutage bei modernen Fernsprechstationen üblich ist, sowie ein Display D. Weiterhin sind die drei für das erfindungsgemäße Verfahren notwendigen Sondertasten ST1 bis ST3 dargestellt. Dabei ist die Sondertaste ST1 auch mit GO bezeichnet, die Sondertaste ST2 mit DO und die Sondertaste ST3 mit UNDO.

Mit dem erfindungsgemäßen Verfahren ist also das Einleiten aller Funktionen und Dienste durch Benutzung von nur zwei universellen Sondertasten in Verbindung mit einem alphanumerischen Display ohne Eingaben von Kennzahlen möglich.

Die erste Sondertaste "GO" dient dazu, die einzelnen Funktionen bzw. Dienste auszuwählen. Diese werden bei Betätigen dieser Taste nacheinander auf dem Display angezeigt. Dabei sind die einzelnen Funktionen und Dienste nach ihrer Verwendungshäufigkeit sortiert. Mittels eines kurzen Tastendrucks werden die einzelnen Dienste bzw. Funktionen einzeln nacheinander angezeigt, während ein längerer Tastendruck der Taste "GO" eine umlaufende Anzeige am Display bewirkt. Gemäß des erfindungsgemäßen Verfahrens werden nur die jeweiligen Funktionen bzw. Dienste an der Fernsprechstation angezeigt, für die auch eine gültige Berechtigung besteht.

Wird bei einer bestimmten Anzeige am Display die zweite Sondertaste ST2 mit der Bezeichnung "DO" betätigt, so wird die am Display angezeigte Funktion realisiert. Die Realisierung kann gegebenenfalls am Display quittiert werden. Mittels der Sondertaste ST3 kann die jeweils aktuelle Funktion bzw. der aktuelle Dienst beendet werden. Diese Taste kann jedoch auch entfallen, wenn das Beenden mit in die auswählbaren Funktionen bzw. Dienste mit aufgenommen wird.

Bei Inbetriebnahme einer Fernsprechstation werden die zugehörigen Berechtigungen für die einzelnen Funktionen und Dienste in den Arbeitsspeicher geladen bzw. bei Veränderungen aktualisiert. Jeweils nach Verlassen des Ruhezustandes wird der zur jeweiligen Situation gehörende Zustand zur Fernsprechstation übertragen. Eine in der Fernsprechstation vorhandene Logik verknüpft Zustand und Berechtigungen für Anzeige und Ausführungen der gewünschten Funktionen, ohne daß die Zentraleinrichtung damit belastet wird.

Anhand eines möglichen Benutzungsablaufs sollen im folgenden die Möglichkeiten und Vorteile des erfindungsgemäßen Verfahrens aufgezeigt werden. Ausgangspunkt soll ein externer Anruf von einem Teilnehmer B sein, den der Teilnehmer A auf seiner Fernsprechstation erhält. Nach Abheben des Hörers besteht ein Gespräch zwischen den Teilnehmern A und B. Entsprechend der vorliegenden Situation wird auf dem Display die Funktion "Rückfragen" angezeigt. Wünscht der Teilnehmer A eine Rückfrage, so betätigt er die Taste "DO" und erhält einen Wählton, worauf er die Rufnummer des Teilnehmers C wählen kann, bei welchem er Rückfragen möchte. Nach Melden des Teilnehmers C besteht ein Gespräch zwischen dem Teilnehmer A und dem Teilnehmer C.

Wünscht nun der Teilnehmer A eine Konferenz zwischen den Teilnehmern A, B und C, so betätigt er die Taste "GO" solange, bis auf dem Display die Anzeige "Konferenz" erscheint, worauf er die Sondertaste "DO" betätigt, womit es zu einer Konferenz zwischen den Teilnehmern A, B und C kommt. Will der Teilnehmer A die bestehende Konferenz beenden, so drückt er die Sondertaste "UNDO", worauf er sich wieder im Gesprächszustand mit dem Teilnehmer B befindet. Danach erscheint auf seinem Display wiederum die Anzeige "Rückfragen".

Wünscht der Teilnehmer A nun z. B. während des Gesprächs mit dem Teilnehmer B einen Termin einzugeben, so betätigt er die Taste "GO" solange, bis auf dem Display das Leistungsmerkmal "Termin" erscheint. Darauf kann er seinen Termin eingeben und den aktuellen Zustand durch Betätigen der Taste "UNDO" beenden. Anschließend erscheint wieder die Anzeige "Rückfragen" im Display, bis der Teilnehmer A das Gespräch mit dem Teilnehmer B beendet.

Da bei dem erfindungsgemäßen Verfahren die *- und die #-Taste des Tastwahlblocks TWB keine Bedeutung haben, können ihre Funktionen gegen die Funktionen der Sondertasten ST1 und ST2 ausgetauscht werden.

## Patentansprüche

1. Verfahren zur Einleitung vermittlungstechnischer Funktionen und Dienste mittels Tasten von Fernsprechstationen mit Arbeitsspeicher und alphanumerischem Display, bei dem abhängig von dem Betätigen einer ersten Sondertaste (GO) alle Funktionen und Dienste nacheinander auswählbar sind um auf dem Display angezeigt zu werden und abhängig von dem Betätigen einer zweiten Sondertaste (DO) die auf dem Display (D) angezeigte Funktion bzw. der angezeigte Dienst automatisch realisiert wird, **dadurch gekennzeichnet** , daß die Funktionen und Dienste nach ihrer Verwendungshäufigkeit sortiert auswählbar sind, wobei auf dem Display (D) nur die Funktionen und Dienste angezeigt werden, welche abhängig von den der jeweiligen Fernsprechstation zugeordneten Teilnehmerberechtigungen der jeweiligen Situation entsprechend vorliegen.

2. Verfahren nach Anspruch 1, **dadurch gekennzeichnet**, daß die jeweils aktuellen Funktionen und Dienste mittels einer dritten Sondertaste beendet werden.

3. Verfahren nach Anspruch 1 oder 2, **dadurch gekennzeichnet**, daß durch längeren Tastendruck der ersten Sondertaste (GO) eine umlaufende Anzeige am Display (D) erfolgt, während ein kurzer Tastendruck der ersten Sondertaste (GO) eine Einzelanzeige auf dem Display bewirkt.

## Claims

1. Method for initiating switching-related functions and services by means of keys of telephone stations with working memory and alphanumeric display, in which method all the functions and services can be successively selected as a function of the actuation of a first special key (GO) in order to be displayed on the display and the function displayed on the display (D) or the displayed service is automatically realized as a function of the actuation of a second special key (DO), characterized in that the functions and services can be selected sorted according to their frequency of use, only the functions and services which are present as a function of the subscriber authorizations, assigned to the respective telephone station in accordance with the respective situation being displayed on the display (D).

2. Method according to Claim 1, characterized in that the respectively present functions and services are terminated by means of a third special key.

3. Method according to Claim 1 or 2, characterized in that a circulating display is presented on the display (D) as a result of a longer depression of the first special key (GO) while a short depression of the first special key (GO) brings about an individual display on the display.

## Revendications

1. Procédé de déclenchement de fonctions et services techniques de commutation à l'aide de touches de postes téléphoniques comportant une mémoire de travail et un dispositif d'affichage alphanumérique, selon lequel on peut sélectionner, en fonction de l'actionnement d'une première touche particulière (GO), toutes les fonctions et tous les services successivement pour les afficher sur le dispositif d'affichage, et on met en oeuvre automatiquement en fonction de l'actionnement d'une seconde touche particulière (DO), la fonction affichée sur le dispositif d'affichage (D) ou le service affiché, caractérisé par le fait que l'on peut sélectionner les fonctions et services en les triant selon la fréquence de leur utilisation et on n'affiche sur le dispositif d'afficahge (D) que les fonctions et services, qui sont présents en fonction des autorisations d'abonnés associées à chaque poste téléphonique, suivant chaque situation.

2. Procédé suivant la revendication 1, caractérisé par le fait que l'on met fin aux fonctions et services actuels au moyen d'une troisième touche particulière.

3. Procédé suivant la revendication 1 ou 2, caractérisé par le fait qu'en appuyant sur la première touche particulière (GO), il s'effectue un affichage circulant sur le dispositif d'affichage (D), tandis qu'un appui de brève durée sur la première touche particulière (GO) provoque un affichage individuel sur le dispositif d'affichage.
